Europäisches Patentamt

(19) European Patent Office

Office européen des brevets

(11) Numéro de publication : **0 146 447**
**B1**

(12) **FASCICULE DE BREVET EUROPÉEN**

(45) Date de publication du fascicule du brevet :
**20.01.88**

(21) Numéro de dépôt : **84402325.9**

(22) Date de dépôt : **15.11.84**

(51) Int. Cl.⁴ : **B 29 C 53/56** // B29L1:00

(54) **Procédé pour réaliser un taraudage dans un tube ou une bielle en un matériau composité.**

(30) Priorité : **18.11.83 FR 8318686**

(43) Date de publication de la demande :
**26.06.85 Bulletin 85/26**

(45) Mention de la délivrance du brevet :
**20.01.88 Bulletin 88/03**

(84) Etats contractants désignés :
**AT BE CH DE GB IT LI LU NL SE**

(56) Documents cités :
**CH-A- 398 056**
**US-A- 2 710 026**
**US-A- 3 661 670**

(73) Titulaire : **SOCIETE FINANCIERE ET IMMOBILIERE SKF et Cie**
**Route de Roybon B.P. 29**
**F-26241 St Vallier sur Rhone Cédex (FR)**

(72) Inventeur : **Daugny, Daniel**
**449, Chemin des Cordiers**
**F-97300 Tournon sur Rhone (FR)**

(74) Mandataire : **Boivin, Claude**
**9, rue Edouard-Charton**
**F-78000 Versailles (FR)**

## Description

La présente invention concerne un procédé pour réaliser un taraudage dans un tube ou une bielle en un matériau composite à base de fibres de carbone enduites de résine polymérisée, dans lequel la partie du tube ou de la bielle devant comporter le taraudage est rapportée dans le corps du tube ou de la bielle, et moulée sur un mandrin fileté.

Il existe à l'heure actuelle des tubes et des bielles en matériaux composites, par exemple en fibres de carbone imprégnées de résine. Leurs utilisations sont nombreuses, en particulier dans le domaine aéronautique.

Ces tubes et bielles sont souvent moulés en disposant des nappes de fibres dans un moule, sur un mandrin gonflable constitué par une vessie pouvant être reliée à une source de fluide sous pression. Lors de la cuisson de la résine, on gonfle la vessie qui presse les nappes de fibres sur la surface interne du moule.

Ils sont généralement terminés par des éléments d'extrémités métalliques collés ou rivés au tube ou bien frettés par celui-ci.

On a cherché à réaliser des tubes et bielles en matière composite dont l'une des extrémités au moins comporte un taraudage.

On peut arriver à ce résultat en moulant l'extrémité du tube sur un mandrin fileté. C'est ainsi que le brevet US 2 710 026 décrit un procédé de fabrication d'un tube en un matériau composite, comportant une extrémité taraudée, dans lequel on rapporte une première préforme destinée à recevoir le taraudage et partiellement polymérisée dans une seconde préforme destinée à constituer le corps du tube, et dans lequel l'ensemble est disposé sur un mandrin comportant une partie filetée, engagée dans la première préforme, puis chauffée à la température désirée. Mais l'expérience montre que ce procédé n'est pas applicable aux bielles ou tubes en fibres de carbone car les fibres du taraudage ne sont pas suffisamment compactées et le taraudage n'est pas capable de transmettre les efforts dans les conditions d'environnement rencontrées dans les aéronefs. De plus, on ne peut disposer une vessie gonflable à l'intérieur du tube et, après cuisson, il arrive que celui-ci comporte des zones plissées.

La présente invention a pour objet un procédé pour réaliser un taraudage dans un tube ou une bielle en un matériau composite à base de fibres de carbone, qui permet d'obtenir un taraudage très résistant et de mouler le tube ou la bielle sur un mandrin expansible.

Ce procédé est caractérisé en ce que la résine de ladite partie du tube ou de la bielle devant comporter le taraudage est polymérisée sur le mandrin fileté pratiquement complètement et sous pression, de façon à obtenir une ébauche comprenant une partie taraudée dure prolongée par des fibres enduites de résine non polymérisée, en ce qu'on introduit un mandrin expansible dans cette ébauche, en ce qu'on rapporte ladite ébauche à l'intérieur d'un tube en résine déjà polymérisée ou à durcir, et en ce qu'on assure enfin la polymérisation sous pression de la résine desdites fibres en chauffant et en assurant l'expansion du mandrin, de façon à les lier aux fibres du tube.

Des modes particuliers de réalisation de l'invention sont spécifiés dans les revendications dépendantes.

On a décrit ci-après, à titre d'exemple non limitatif, un mode de mise en œuvre du procédé selon l'invention, avec référence au dessin annexé dans lequel :

La Figure 1 montre en coupe axiale le moulage de la partie taraudée ;

La Figure 2 est une vue en coupe axiale montrant la partie taraudée polymérisée et les parties non polymérisées qui la prolongent ;

Les Figures 3 et 4 montrent en coupe axiale le moulage du tube proprement dit ;

La Figure 5 est une demi-coupe d'un détail d'une variante.

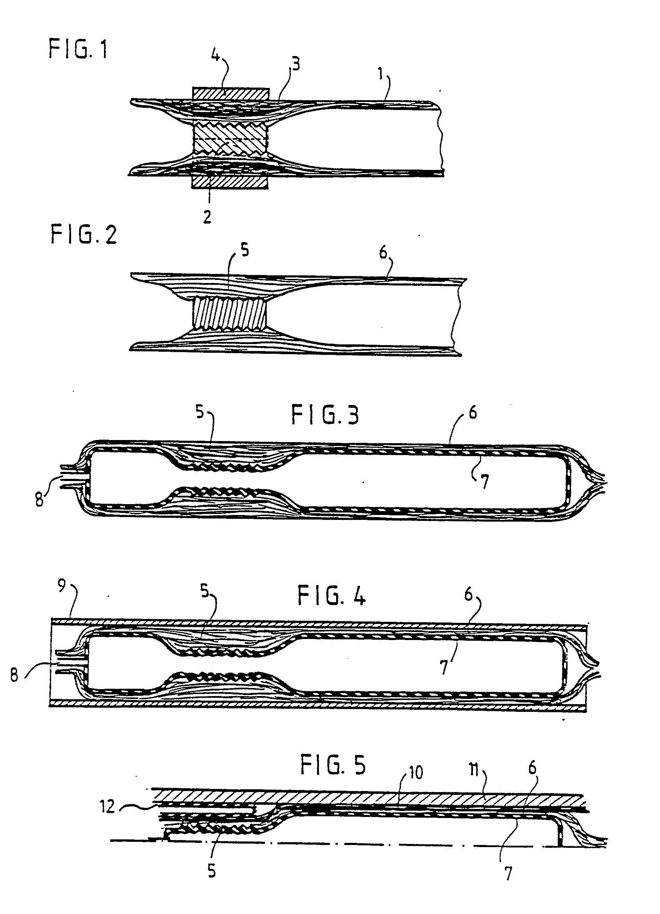

Pour réaliser un tube composite comportant un taraudage, on enroule une ou plusieurs nappes 1 en fibres de carbone préimprégnées de résine sur un mandrin fileté 2 en une matière présentant un coefficient de dilatation thermique élevé, par exemple en aluminium, la longueur du mandrin est faible par rapport à celle des nappes. On peut renforcer l'épaisseur des nappes au droit du mandrin à l'aide de nappes ou tissus auxiliaires 3 de même longueur que celui-ci. Puis on dispose autour du mandrin 2 un moule 3-4 en une matière présentant un faible coefficient de dilatation thermique et constitué par exemple de deux demi-coquilles, on presse et on chauffe le moule tout en maintenant tendues les nappes 1. La pression exercée sur les fibres est augmentée par le fait que le mandrin 2 se dilate davantage que le moule extérieur 4. La résine au droit du mandrin 2 polymérise et durcit. Après durcissement, on retire le mandrin 2 en la dévissant ; on obtient ainsi une ébauche comprenant une partie taraudée dure 5 prolongée de part et d'autre par des fibres non polymérisées 6 (Figure 2). On emmanche cette ébauche sur une vessie gonflable 7 munie d'un conduit 8 pour l'admission d'un fluide sous pression (Figure 3).

On enfile l'ensemble dans un tube 9 déjà polymérisé qui forme moule extérieur, on gonfle la vessie 7 de façon à presser l'ébauche contre le tube, et on chauffe. Les fibres enduites de résine non polymérisée 6 se lient aux fibres du tube 9 et la résine qui les imprègne polymérise (Figure 4).

On peut également, comme le montre la Figure 5, disposer sur l'ébauche et la vessie 7 des nappes ou tissus de fibres enduites de résine non polymérisée 10 destinées à constituer le corps du tube proprement dit et placer l'ensemble dans un moule métallique 11. Dans ce cas, on peut utiliser un moule ayant un diamètre supérieur au diamètre extérieur de la portion taraudée 5 déjà polymérisée et recouverte des nappes 10, et interposer une deuxième vessie annulaire 12 entre les nappes 10 et le moule, au droit de cette portion 5. On obtient ainsi un tube cylindrique dont l'extrémité taraudée a un diamètre réduit.

**Revendications**

1. Procédé pour réaliser un taraudage dans un tube ou une bielle en un matériau composite à base de fibres de carbone enduites de résine polymérisée, dans lequel la partie du tube ou de la bielle devant comporter le taraudage est rapportée dans le corps du tube ou de la bielle, et moulée sur un mandrin fileté (2), caractérisé en ce que la résine de ladite partie du tube ou de la bielle devant comporter le taraudage est polymérisée sur le mandrin fileté pratiquement complètement et sous pression, de façon à obtenir une ébauche comprenant une partie taraudée dure (5) prolongée par des fibres enduites de résine non polymérisée (6), en ce qu'on introduit un mandrin expansible (7) dans cette ébauche, en ce qu'on rapporte ladite ébauche à l'intérieur d'un tube en résine déjà polymérisée (9) ou à durcir (10), et en ce qu'on assure enfin la polymérisation sous pression de la résine desdites fibres (6) en chauffant et en assurant l'expansion du mandrin, de façon à les lier aux fibres du tube (9 ou 10).

2. Procédé selon la revendication 1, caractérisé en ce qu'on enroule une ou plusieurs nappes ou tissu (1) sur un mandrin fileté (2) dont la longueur est faible par rapport à celle des nappes.

3. Procédé selon la revendication 2, caractérisé en ce qu'on renforce l'épaisseur des nappes ou tissu au droit du mandrin à l'aide de nappes ou tissus (3) ayant sensiblement la même longueur que le mandrin.

4. Procédé selon l'une des revendications 1 à 3, caractérisé en ce qu'on dispose sur la partie taraudée (5) des nappes ou tissus (10) de fibres enduites de résine non polymérisée, qu'on emmanche l'ensemble dans un moule (11) de diamètre supérieur au diamètre extérieur de la partie taraudée (5) recouverte des nappes (10), et en ce qu'on interpose une vessie annulaire (12) entre les nappes et le moule, au droit de la partie taraudée.

**Claims**

1. Process for carrying out threading or tapping inside a tube or connecting rod made of a composite material having a base of carbon fibers coated with polymerized resin and whereby that part of the tube or connecting rod required to comprise the threading is inserted into the body of the tube or connecting rod and moulded onto a threaded mandrel (2), characterized in that the resin of the said part of the tube or connecting rod required to comprise the threading is polymerized under pressure on the almost completely threaded mandrel so as to obtain a preform including a hard threaded part (5) extended by fibers coated with non-polymerized resin (6) ; in that an expansible mandrel (7) is introduced into this preform ; in that the said preform is inserted inside a resin tube already polymerized (9) or to be hardened (10) ; and in that polymerization under pressure of the resin of the said fibers (6) is ensured by heating and expanding the mandrel so as to link them to the fibers of the tube (9 or 10).

2. Process according to claim 1, characterized in that one or more laps or fabric elements (1) is or are wound onto a threaded mandrel (2) whose length is shorter than the length of the laps.

3. Process according to claim 2, characterized in that the thickness of the laps or fabric is reinforced at the right of the mandrel by using laps or fabric (3) which are approximately as long as the mandrel.

4. Process according to one of claims 1 to 3, characterized in that disposed on the threaded part (5) are laps or textiles (10) with fibers coated with non-polymerized resin, that everything is fixed inside a mould (11) whose diameter is larger than the external diameter of the threaded part (5) covered with the laps (10), and in that a ringshaped bladder (12) is inserted between the laps and the mould at the right of the threaded part.

**Patentansprüche**

1. Verfahren zum Erzeugen eines Innengewindes in einem Rohr oder einer Kolbenstange aus einem Verbundmaterial auf der Basis von mit polymerisiertem Harz beschichteten Kohlenstoff-Fasern, wobei der mit dem Innengewinde zu versehende Rohr- oder Kolbenstangenteil in den Rohr- oder Kolbenstangenkörper eingesetzt und auf einem Gewindedorn (2) geformt wird, dadurch gekennzeichnet, daß das Harz des mit dem Innengewinde zu versehenden Rohr- oder Kolbenstangenteils auf dem Gewindedorn nahezu vollständig und drucklos polymerisiert wird zum Erzielen eines Formlings mit einem harten Innengewindeabschnitt (5), der durch mit unpolymerisiertem Harz beschichtete Fasern (6) verlängert ist, daß ein Expansionsdorn (7) in den Formling eingebracht wird, daß der Formling in das Innere eines aus bereits polymerisiertem (9) oder zu härtenden (10) Harz bestehenden Rohres eingesetzt wird, und daß schließlich die Polymerisation des Harzes der Fasern (6) unter Druck und unter Erhitzen zum Gewährleisten der Expansion des Dorns durchgeführt wird zwecks Verbinden dieser Fasern mit denen des Rohres (9 oder 10).

2. Verfahren nach Anspruch 1, dadurch gekennzeichnet, daß eine oder mehrere Bahnen oder Gewebe (1) auf einen Gewindedorn (2) gewickelt wird/werden, dessen Länge in bezug auf die Bahnen gering ist.

3. Verfahren nach Anspruch 2, dadurch gekennzeichnet, daß die Stärke der Bahnen oder des Gewebes im Bereich des Dorns vermittels Bahnen oder Gewebe (3) verstärkt wird, die im wesentlichen gleich lang sind/ist wie der Dorn.

4. Verfahren nach einem der Ansprüche 1 bis 3, dadurch gekennzeichnet, daß auf den mit Innengewinde versehenen Teil (5) Bahnen oder Gewebe (10) aus mit nicht polymerisiertem Harz beschichteten Fasern aufgebracht werden/wird, daß das Ganze in eine Form (11) eingebracht wird, deren Durchmesser größer ist als der Außendurchmesser des mit Bahnen (10) bedeckten und mit Innengewinde versehenen Teils (5), und daß zwischen die Bahnen und die Form ein ringförmiger Drucksack (12) eingesetzt wird, und zwar im Bereich des mit Innengewinde versehenen Teils.

FIG. 1

FIG. 2

FIG. 3

FIG. 4

FIG. 5